# FASCICULE DE BREVET EUROPEEN

(11) **EP 3 230 772 B1**
(45) Date de publication et mention de la délivrance du brevet: **23.02.2022**
(21) Numéro de dépôt: 15817093.6
(22) Date de dépôt: 07.12.2015
(51) Int. Cl.: G01V 3/08, G06F 3/046, G06F 3/0354

(54) **PROCÉDÉ DE LOCALISATION D'AU MOINS UN OBJET MAGNÉTIQUE MOBILE, ET SYSTÈME ASSOCIÉ**
VERFAHREN ZUR ORTUNG VON MINDESTENS EINEM BEWEGLICHEN MAGNETISCHEN OBJEKT UND ZUGEHÖRIGES SYSTEM
METHOD FOR LOCATING AT LEAST ONE MOVABLE MAGNETIC OBJECT AND ASSOCIATED SYSTEM

(30) Priorité: 09.12.2014 FR 1462108
(43) Date de publication de la demande: 18.10.2017
(73) Titulaire: Advanced Magnetic Interaction, AMI, 38170 Seyssinet-Pariset (FR)
(72) Inventeur: HAUTSON, Tristan, 38600 Fontaine (FR); ALOUI, Rabeb, 38600 Fontaine (FR)
(74) Mandataire: Dupont, Jean-Baptiste
(86) Numéro de dépôt international: PCT/EP2015/078817
(87) Numéro de publication internationale: WO 2016/091800

(56) Documents cités:
- FR-A1- 2 988 872
- US-A1- 2003 095 115
- US-A1- 2012 078 562

## Description

La présente invention porte sur un procédé de localisation d'au moins un objet magnétique mobile, et un système associé.

Il est connu des documents portant sur des procédés et dispositifs de localisation d'un objet magnétique, tel le document FR 2 988 862.

Le document FR 2 988 862 divulgue un procédé de localisation d'un objet magnétique a partir de mesures d'un réseau de magnétomètres tri-axes, ce réseau comportant N magnétomètres tri-axes reliés mécaniquement les uns aux autres sans aucun degré de liberté pour conserver une distance connue entre chacun de ces magnétomètres, dans lequel N est un nombre entier supérieur à cinq. Le réseau de magnétomètres est compris dans un dispositif comprenant une surface d'appui pour un support d'écriture tel une ou plusieurs feuilles, reliées ou non.

FR 2 988 872 A1 (COMMISSARIAT ENERGIE ATOMIQUE [FR]) 4 octobre 2013 décrit un procédé de localisation d'un objet magnétique mobile par rapport à un réseau de magnétomètres triaxiaux.

La localisation d'un objet magnétique peut être considéré comme sa position (coordonnées (x, y, z) dans un repère fixe par rapport au réseau de magnétomètres) et la valeur de son moment magnétique ((Mx, My, Mz) dans le même repère) représentatif de l'orientation de l'objet magnétique.

L'introduction d'un bais dans ce type de procédé rend la localisation imprécise, voire instable

Dans une application de numérisation de la trace manuscrite d'un objet magnétique mobile, les magnétomètres sont amenés à percevoir des champs magnétiques importants lorsque l'objet magnétique est à faible distance de ces derniers. Or, les performances de la plupart des magnétomètres se dégradent lorsqu'ils sont soumis à un champ magnétique important, généralement de l'ordre de 3 Gauss. De même, les matériaux ferromagnétiques II apparait notamment un champ magnétique rémanent qui correspond à un biais de mesure supplémentaire.

L'utilisation d'un tel dispositif dans un système de numérisation d'une trace manuscrite pour lequel la précision de la localisation recherchée est inférieure à 1 mm, implique qu'un biais de mesure entraîne une perte de précision voire une divergence des algorithmes d'estimations mis en œuvre dans le filtrage de localisation.

Ce phénomène de magnétisation des magnétomètres est généralement négligé, ce qui ne permet pas d'obtenir une précision suffisante. En effet, les biais de mesure des magnétomètres, ainsi que la magnétisation générée par l'utilisation d'un objet magnétique mobile, tel un stylet muni d'un aimant, dégradent l'estimation des position et orientation de l'aimant.

Il est connu de prendre en compte les biais de mesures des magnétomètres en début d'utilisation, en mémorisant, au démarrage, la valeur des courante des capteur et en la retranchant par la suite avant l'étape de calcul des algorithmes d'estimation. Ces biais de mesures ne sont ainsi plus visibles et n'ont donc plus d'effet sur l'algorithme.

Cette solution prend uniquement en compte les biais de mesures initiaux et ne permet donc pas d'assurer un fonctionnement correct sur une longue durée. Le phénomène de magnétisation crée des biais supplémentaires au cours du temps qui ne sont pas pris en compte avec l'initialisation.

En effet, pour un aimant standard dont le moment est proche de 0.2 A.m², les magnétomètres peuvent commencer à être magnétisés, c'est-à-dire présenter un décalage ou offset en langue anglaise, dès que l'aimant est plus proche que 6 cm du dispositif. Cela limite l'utilisation du dispositif au cours du temps en créant des erreurs d'estimations.

Un but de l'invention est de pallier ces problèmes.

Il est proposé, selon un aspect de l'invention, un procédé de localisation d'au moins un objet magnétique mobile par rapport à un réseau d'au moins N magnétomètres triaxiaux reliés entre-eux mécaniquement sans aucun degré de liberté pour conserver une position relative connue de ces magnétomètres, N étant un nombre entier au moins égal à 2, comprend, en continu:
- une étape de détection d'un magnétomètre susceptible d'être magnétisé, i.e. susceptible de délivrer en sortie des mesures comprenant un biais de mesure suite à une magnétisation;
- une étape de correction, au moyen d'un biais de correction, des mesures délivrées par ledit magnétomètre susceptible d'être magnétisé, ledit biais de correction correspondant à un écart entre les mesures fournies par ledit magnétomètre en entrée d'un filtrage de localisation et les estimations, lors dudit filtrage de localisation, des données délivrées par ledit magnétomètre; et
- une étape de prise en considération dudit magnétomètre comme non susceptible d'être magnétisé, par prise en compte de ladite étape de correction dudit magnétomètre susceptible d'être magnétisé.

Les biais considérés sont des vecteurs de biais, i.e. ils peuvent être mono-axiaux, bi-axiaux ou tri-axiaux. En effet, la magnétisation peut être selon un deux ou trois axes, comme la correction.

Ainsi, il est tenu compte des magnétisations des magnétomètres et composants ferromagnétiques proche des capteurs par le ou les objets magnétiques mobiles, qui sont corrigées, en continu. En outre, un tel procédé permet de prendre en compte les magnétisations aux démarrage du dispositif.

Dans un mode de mise en œuvre, le procédé comprend une étape de limitation d'influence consistant à limiter, dans ledit filtrage de localisation, l'influence des mesures fournies par ledit magnétomètre susceptible d'être magnétisé.

Ainsi, la précision et la fiabilité du dispositif de localisation est améliorée, en limitant l'influence du ou des magnétomètres et des objets ferromagnétiques susceptibles d'être magnétisés.

Selon un mode de mise en œuvre, l'étape de limitation d'influence comprend une augmentation d'une variance associée aux mesures dudit magnétomètre susceptible d'être magnétisé dans ledit filtrage de localisation utilisant un filtrage de Kalman.

Ainsi, les estimations faites durant le filtrage de localisation le poids ou importance donnée aux magnétomètres susceptibles d'être magnétisés directement ou soumis à l'influence de composant ferromagnétique.

En variante, l'étape de limitation d'influence comprend une non prise en compte des mesures dudit magnétomètre susceptible d'être magnétisé dans ledit filtrage de localisation.

Ainsi, le ou les magnétomètres susceptibles d'être magnétisés ne sont pas pris en compte dans le filtrage de localisation. Cette non prise en compte offre également l'avantage de réduire la puissance de calcul nécessaire et donc la consommation du système qui peut utiliser le temps disponible pour passer en veille par exemple.

Dans un mode de mise en œuvre, l'étape de détection utilise une information de saturation d'un registre de statuts directement fournie par ledit magnétomètre susceptible d'être magnétisé. Ce statut peut décrire la saturation d'un ou plusieurs axes du magnétomètre.

Ainsi, il est possible de détecter la saturation d'un ou plusieurs axes d'un magnétomètre susceptible d'être magnétisé.

Selon un mode de mise en œuvre, l'étape de détection détecte un magnétomètre susceptible d'être magnétisé lorsqu'une norme des valeurs des mesures fournies par ledit magnétomètre susceptible d'être magnétisé sont supérieures à un premier seuil.

Le premier seuil peut par exemple être de l'ordre de la moitié de la pleine échelle de mesure, ou, en d'autres termes la moitié du maximum mesurable par le magnétomètre. Ce seuil peut être exprimés en bit de poids faible ou LSB pour "last significant bit" en langue anglaise.

Ainsi, si un magnétomètre se magnétise avant une saturation, il est possible de détecter que ce dernier est magnétisé. De plus, un champ magnétique important sur le capteur traduit également un champ magnétique important sur les composants proches qui peuvent également être magnétisés et donc présenter un offset ou biais sur le magnétomètre.

Dans un mode de mise en œuvre, l'étape de détection détecte un magnétomètre susceptible d'être magnétisé lorsqu'une norme des estimations, lors dudit filtrage de localisation, des données délivrées par ledit magnétomètre susceptible d'être magnétisé, sont supérieures d'un deuxième seuil, à la norme des estimations desdites données délivrées calculées à partir des estimations, lors dudit filtrage de localisation, des données délivrées par les autres magnétomètre non détectés comme susceptibles d'être magnétisés.

Le deuxième seuil peut par exemple valoir deux fois la pleine échelle du magnétomètre, et être exprimés en LSB.

Ainsi, si un magnétomètre susceptible d'être magnétisé renvoie des données erronées en présence d'un champ magnétique important, les valeurs estimés permettent de détecter la magnétisation de ce capteur.

De plus, si on souhaite utiliser un magnétomètre à une pleine échelle plus faible pour limiter le bruit de quantification, cette méthode permet de détecter précisément la magnétisation même en dehors de la plage de mesures du capteur. En effet, les mesures estimées ne sont pas écrêtées à la pleine échelle du capteur.

Selon un mode de mise en œuvre, l'étape de détection détecte un magnétomètre susceptible d'être magnétisé lorsqu'une norme d'une erreur sur les mesures d'un magnétomètre est supérieure, d'un troisième seuil, à chacune des norme des erreurs sur les mesures des autres magnétomètres, une erreur sur les mesures d'un magnétomètre correspondant à un écart entre les mesures fournies par ledit magnétomètre en entrée d'un filtrage de localisation et les estimations, lors dudit filtrage de localisation, des données délivrées par ledit magnétomètre.

En d'autres termes, pour chaque magnétomètre, on calcule d'abord la différence entre mesures réelles et mesures ou données estimées, puis on normalise ensuite cette différence que l'on compare pour chaque magnétomètre susceptible d'être magnétisé à celle des autres capteurs.

Ainsi, la magnétisation d'un magnétomètre peut être détectée même lorsque l'aimant n'est pas proche, que le champ estimé n'est pas important, ou que le magnétomètre n'a pas été saturé ...

En variante, il est possible de seulement comparer la norme de la différence à un seuil (sans relier cette norme aux erreurs de mesures des autres capteurs)

Dans un mode de mise en œuvre, dans lequel l'étape de correction est réalisée lorsque ledit magnétomètre susceptible d'être magnétisé n'est pas saturé.

Cela permet d'améliorer la fiabilité de la correction, car quand le magnétomètre est saturé, la mesure retournée par le magnétomètre n'est pas représentative du champ magnétique réel (car le capteur est saturé).

Selon un mode de mise en œuvre, dans lequel l'étape de correction est réalisée lorsque les mesures délivrées par ledit magnétomètre susceptible d'être magnétisé sont inférieures à un quatrième seuil.

Le quatrième seuil peut être choisi comme valant cinq fois le bruit du magnétomètre ou RMS Noise pour "root mean square noise" en langue anglaise, et peut être exprimé en Tesla.

Cette condition est en générale vérifiée lorsque la source magnétique est loin du capteur et ne risque pas de magnétiser à nouveau ce dernier.

En variante, l'étape de correction est réalisée lorsque les estimations des données délivrées par ledit magnétomètre susceptible d'être magnétisé sont inférieures au quatrième seuil.

Considérer les données estimées a le mérite de ne pas avoir un biais de mesure et la comparaison à un seuil est plus fiable.

Dans un mode de mise en œuvre, l'étape de correction est réalisée lorsque la distance séparant ledit magnétomètre susceptible d'être magnétisé et le ou les objets magnétiques mobiles est supérieure à un cinquième seuil.

Ce seuil peut être choisi comme un multiple de la plus grande dimension de l'objet magnétique, par exemple trois fois la plus grande dimension de l'objet magnétique.

Ainsi, il est possible de corriger un magnétomètre magnétisé même si le champ magnétique estimé n'a pas été calculé pour ce capteur. Par exemple, le magnétomètre étant détecté comme magnétisé, il est possible de ne plus calculer le champ magnétique estimé jusqu'à ce que ce capteur soit corrigé.

Selon un mode de mise en œuvre, dans lequel l'étape de correction est réalisée lorsque le ou les objets magnétiques mobiles sont dans une position stable.

Ainsi, les mesures estimées sont plus fiables lorsque l'algorithme de localisation du filtrage de localisation a convergé vers la position réelle de l'objet magnétique mobile. En effet, lors de mouvements rapides, l'erreur de mesure intègre également les erreurs de convergence de l'algorithme.

Ce seuil peut par exemple valoir 10⁻⁶ mm².

Dans un mode de mise en œuvre, dans lequel l'étape de correction est réalisée lorsqu'une variance d'une position estimée du ou des objets magnétiques mobiles, sur une pluralité d'estimations successives, est inférieure à un sixième seuil.

En effet, une variance faible décrit un faible mouvement de l'objet magnétique mobile et donc l'algorithme de localisation a eu le temps de converger vers la position de l'objet magnétique mobile.

Selon un mode de mise en œuvre, dans lequel l'étape de correction est réalisée lorsqu'une variance d'une erreur sur les mesures des magnétomètres non détectés comme susceptibles d'être magnétisés, sur une pluralité d'estimations successives, est inférieure à un septième seuil.

Ce seuil peut être choisi comme valant vingt-cinq fois le carré du bruit du magnétomètre ou RMS Noise, exprimé en Tesla².

Ainsi, l'erreur de mesure décrit également l'état de convergence du filtrage de localisation. Une faible erreur de mesures signifie que le filtre a convergé vers la position de l'objet magnétique mobile.

Il est également proposé, selon un autre aspect de l'invention un système de localisation d'au moins un objet magnétique mobile comprenant:
- un réseau d'au moins N magnétomètres triaxiaux reliés entre-eux mécaniquement sans aucun degré de liberté pour conserver une position relative connue de ces magnétomètres, N étant un nombre entier au moins égal à 2;
- une unité électronique de traitement adapté pour déterminer la localisation du ou des objets magnétiques mobiles à partir de mesures fournies par les magnétomètres du réseau et d'un filtre de localisation; ladite unité électronique de traitement comprenant:
- des moyens de détection d'un magnétomètre susceptible d'être magnétisé, i.e. susceptible de délivrer en sortie des mesures comprenant un biais de mesure suite à une magnétisation;
- des moyens de correction, au moyen d'un biais de correction, des mesures délivrées par ledit magnétomètre susceptible d'être magnétisé, ledit biais de correction correspondant à un écart entre les mesures fournies par ledit magnétomètre en entrée d'un filtrage de localisation et les estimations, lors dudit filtrage de localisation, des données délivrées par ledit magnétomètre; et
- des moyens de considération dudit magnétomètre comme non susceptible d'être magnétisé, par prise en compte de ladite étape de correction dudit magnétomètre susceptible d'être magnétisé.

L'invention sera mieux comprise à l'étude de quelques modes de réalisation décrits à titre d'exemples nullement limitatifs et illustrés par les dessins annexés sur lesquels :
- les figures 1 et 2 illustrent schématiquement un dispositif de localisation selon l'état de la technique connu; et
- les figures 3 et 4 illustrent schématiquement un procédé selon un aspect de l'invention.

Sur l'ensemble des figures, les éléments ayant des références identiques sont similaires.

Dans la présente description, les caractéristiques et fonctions bien connues de l'homme du métier ne sont pas décrites en détails.

En outre, dans la présente description, les biais considérés sont des vecteurs de biais, i.e. ils peuvent être mono-axiaux, bi-axiaux ou tri-axiaux. En effet, la magnétisation peut être selon un deux ou trois axes, tout comme la correction. Aussi, lorsqu'on évoque des biais il s'agit de vecteurs de biais qui donc peuvent être à une, deux ou trois dimensions, selon le nombre d'axes touchés par la magnétisation.

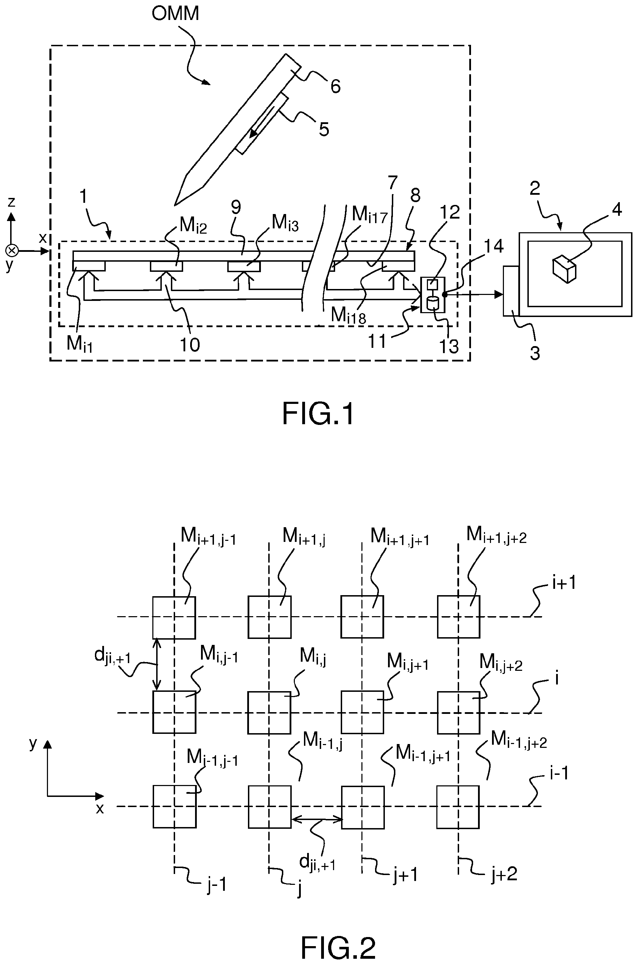

La figure 1 représente un dispositif de localisation 1 d'un objet magnétique mobile OMM selon l'état de l'art, par exemple décrit dans le document FR 2988862 A1.

Le dispositif de localisation 1, en l'espèce, commande un appareil électronique 2, par exemple un écran 2 raccordé à une unité de commande 3 capable de commander l'affichage d'une image sur cet écran 2.

Sur l'exemple représenté, l'unité 3 commande la position et l'orientation d'un curseur 4 sur l'écran 2. Par exemple, le curseur 4 a une forme tridimensionnelle, telle un parallélépipède rectangle.

Un objet magnétique mobile OMMₖ comprend un aimant permanent 5 présentant un moment magnétique non nul même en absence de champ magnétique extérieur et un ustensile 6 non magnétique. Par non magnétique, on entend un ustensile réalisé dans un matériau ne présentant aucune propriété magnétique mesurable. Par exemple, l'ustensile 6 est un crayon, un stylo ou un effaceur en bois ou en plastique. L'ustensile 6 peut être localisé à partir de la localisation de l'aimant permanent 5. L'ustensile 6 permet aussi de faciliter la manipulation de l'aimant permanent 5, notamment lorsque celui-ci est de petite taille. Typiquement, la combinaison de l'aimant permanent 5 et de l'ustensile 6 est librement déplaçable directement par la main d'un être humain dans un repère orthogonal XYZ fixé sans aucun degré de liberté au dispositif 1. En l'espèce, les directions X et Y sont horizontales (plan du support d'écriture) et la direction Z est verticale. A cet effet, cette combinaison pèse moins d'un kilo et, de préférence, moins de 200g. Les dimensions de cette combinaison sont suffisamment réduites pour pouvoir être saisie et déplacée par une seule main d'un utilisateur. Le ou les objets magnétiques mobiles OMMₖ sont librement déplaçables dans le repère orthogonal XYZ.

Par exemple, le champ magnétique coercitif d'un aimant est supérieur à 100 A.m⁻¹ ou 500 A.m⁻¹. Par exemple, il est réalisé en matériau ferro- ou ferrimagnétique. L'aimant permanent 5 a une forme oblongue. Sur la figure 1, la direction du moment magnétique de l'aimant permanent 5 est représentée par une flèche parallèle à la direction longitudinale de cet objet. En variante, l'aimant permanent 5 peut être en forme d'anneau entourant l'ustensile 6. La plus grande longueur de l'aimant permanent 5 est notée L par la suite.

La puissance de l'aimant permanent 5 est typiquement supérieure à 0,01 A.m² ou 0,1 A.m². Dans ce mode de réalisation, l'aimant permanent 5 est fixé sans aucun degré de liberté sur l'ustensile 6.

Le dispositif de localisation 1 permet de localiser l'aimant permanent 5 dans le repère XYZ. Par localisation, on entend ici la détermination de la position x, y, z de l'aimant permanent 5 dans le repère XYZ et aussi la détermination de l'orientation de l'aimant permanent 5 par rapport aux axes X, Y et Z du repère XYZ. Par exemple, l'orientation de l'aimant permanent 5 est représentée par les angles *θₓ, θ_{y}, et θ_{z}* du moment magnétique de l'aimant permanent 5, respectivement, par rapport aux axes X, Y et Z du repère.

Le dispositif de localisation 1 comporte un réseau de N magnétomètres tri-axes Mᵢⱼ. Sur la figure 1, les traits ondulés verticaux indiquent qu'une partie du dispositif de localisation 1 n'a pas été représentée.

Typiquement, N peut être supérieur à cinq et, de préférence, supérieur à seize ou trente-deux, voire égal à soixante-quatre.

Dans ce mode de réalisation, les magnétomètres Mᵢⱼ sont alignés en lignes et en colonnes pour former une matrice ou réseau. En l'espèce, cette matrice comporte huit lignes et huit colonnes. Les indices i et j identifient, respectivement, la ligne et la colonne de cette matrice à l'intersection de laquelle se trouve le magnétomètre Mᵢⱼ.

Sur la figure 1, seuls les magnétomètres Mᵢ₁, Mᵢ₂, Mᵢ₃, Mᵢ₄ et Mᵢ₈ d'une ligne i sont visibles. La position des magnétomètres Mᵢⱼ les uns par rapport aux autres est décrite plus en détail sur la figure 2.

Chaque magnétomètre Mᵢⱼ est fixé sans aucun degré de liberté aux autres magnétomètres. A cet effet, les magnétomètres Mᵢⱼ sont fixés sans aucun degré de liberté sur une face arrière 7 d'une plaque rigide 8. Cette plaque rigide 8 présente une face avant 9 tournée vers l'aimant permanent 5. La plaque 8 est réalisée dans un matériau non magnétique rigide. Par exemple, la plaque 8 peut être en verre.

Chaque magnétomètre Mᵢⱼ mesure la direction et l'intensité du champ magnétique généré par l'aimant permanent 5. Pour cela, chaque magnétomètre Mᵢⱼ mesure la norme de la projection orthogonale du champ magnétique généré par l'aimant permanent 5 au niveau de ce magnétomètre Mᵢⱼ sur trois axes de mesure de ce magnétomètre. En l'espèce, ces trois axes de mesure sont orthogonaux entre eux. Par exemple, les axes de mesure de chacun des magnétomètres Mᵢⱼ sont, respectivement, parallèles aux axes X, Y et Z du repère.

Chaque magnétomètre Mᵢⱼ est raccordé par l'intermédiaire d'un bus 10 de transmission d'informations à une unité de traitement 11.

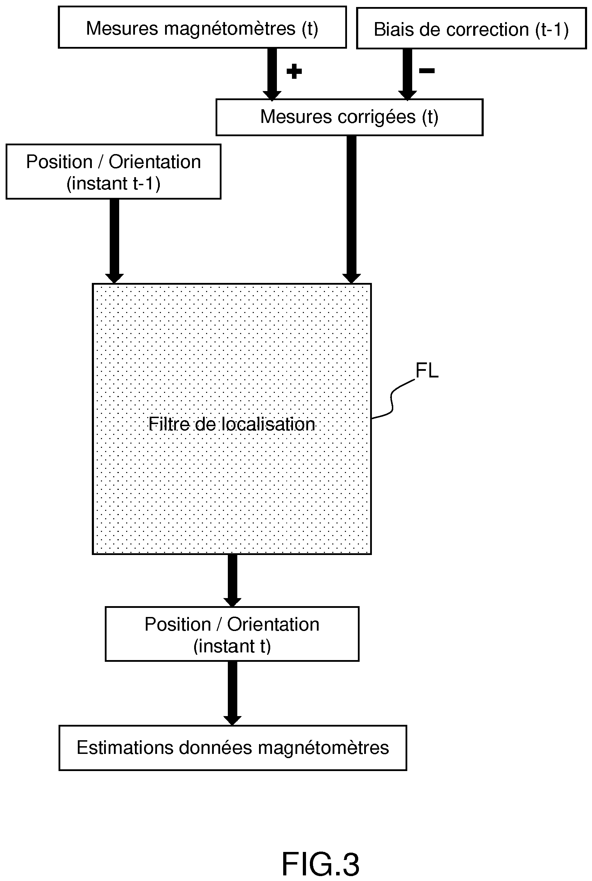

L'unité de traitement 11 est capable de déterminer la position et l'orientation de l'aimant permanent 5 dans le repère XYZ à partir des mesures des magnétomètres Mᵢⱼ. A cet effet, l'unité 11 comporte un calculateur électronique 12 programmable apte à exécuter des instructions enregistrées sur un support d'enregistrement d'informations. L'unité 11 comprend donc également une mémoire 13 contenant les instructions nécessaires pour l'exécution par le calculateur 12 du procédé de la figure 3.

En particulier, l'unité 11 implémente un modèle physico-mathématique associant chaque mesure d'un magnétomètre Mᵢⱼ à des paramètres représentatifs de la position et de l'orientation de l'aimant permanent 5, i.e. également de l'ustensile 6, dans le repère XYZ.

Ce modèle est implémenté sous la forme d'un filtre d'estimation non linéaire, par exemple un filtre de Kalman étendu.

Ce modèle est typiquement construit a partir des équations physiques de l'électromagnétisme. Pour construire ce modèle, l'aimant permanent 5 est approximé par un dipôle magnétique. Cette approximation n'introduit que très peu d'erreurs si la distance entre l'aimant permanent 5 et le magnétomètre Mᵢⱼ est supérieure à 2L et, de préférence, supérieure à 8L; L étant la plus grande dimension de l'aimant permanent 5. Typiquement, L est inférieur à 20 cm et, de préférence, inférieur à 10 ou 5cm.

L'unité 11 est également capable de restituer la position et l'orientation mesurée de l'aimant permanent 5 sur une interface 14.

L'unité de commande 3 est raccordée à l'unité 11 par l'intermédiaire de cette interface 14.

La figure 2 représente une partie des magnétomètres Mᵢⱼ du dispositif de localisation 1. Ces magnétomètres Mᵢⱼ sont alignés en lignes i parallèles à la direction X. Ces magnétomètres sont également alignés en colonnes j parallèles à la direction Y pour former une matrice ou réseau. Les lignes i et les colonnes j sont disposées dans l'ordre des indices croissants.

Le centre du magnétomètre Mᵢⱼ se trouve à l'intersection de la ligne i et de la colonne j. Le centre du magnétomètre correspond au point auquel le champ magnétique est mesuré par ce magnétomètre. En l'espèce, les indices i et j appartiennent à l'intervalle [1 ; 8].

Les centres de deux magnétomètres Mᵢⱼ et M_{1,j+1} immédiatement consécutifs le long d'une ligne i sont séparés par une distance connue d_{i,j,j+1}. De façon similaire, le centre de deux magnétomètres Mᵢⱼ et M_{i+1,j} immédiatement consécutifs le long d'une même colonne j sont séparés par une distance connue d_{j,i,i+1}.

Dans le cas particulier présentement décrit, quelle que soit la ligne i, la distance d_{i,j,j+1} est la même. Cette distance est donc notée dⱼ. De façon similaire, quelle que soit la colonne j, la distance d_{j,i,i+1} entre deux magnétomètres est la même. Cette distance est donc notée dᵢ. Sur l'exemple décrit, les distances dᵢ et dⱼ sont toutes les deux égales à d.

Typiquement, la distance d est comprise entre 1 et 4 cm lorsque 1
- la puissance de l'aimant permanent est de 0,5 A.m²,
- la sensibilité des magnétomètres est de 4.10⁻⁷T, et
- le nombre de magnétomètres Mᵢⱼ est de soixante-quatre.

La figure 3 illustre schématiquement un procédé connu de localisation d'au moins un objet magnétique mobile OMMₖ par rapport à un réseau d'au moins N magnétomètres triaxiaux M_{i,j} reliés entre-eux mécaniquement sans aucun degré de liberté pour conserver une position relative connue de ces magnétomètres.

Les mesures effectuées par les magnétomètres M_{i,j} à l'instant courant t sont corrigées d'un offset respectif avant le filtrage de localisation FL, qui reçoit également en entrée la localisation (par exemple position et orientation) de chaque objet magnétique mobile OMMₖ de l'instant précédent t-1. Le filtrage de localisation FL délivre en sortie la localisation (par exemple position et orientation) de chaque objet magnétique mobile OMMₖ à l'instant courant t, permettant de calculer des estimations des données des magnétomètres M_{i,j}.

Les offsets respectifs sont alors constants au cours du temps, ce qui ne permet pas d'assurer un fonctionnement correct sur la durée de fonctionnement des magnétomètres, car le phénomène de magnétisation crée des biais supplémentaires au cours du temps qui ne sont pas pris en compte ; seul les biais initiaux sont alors pris en compte.

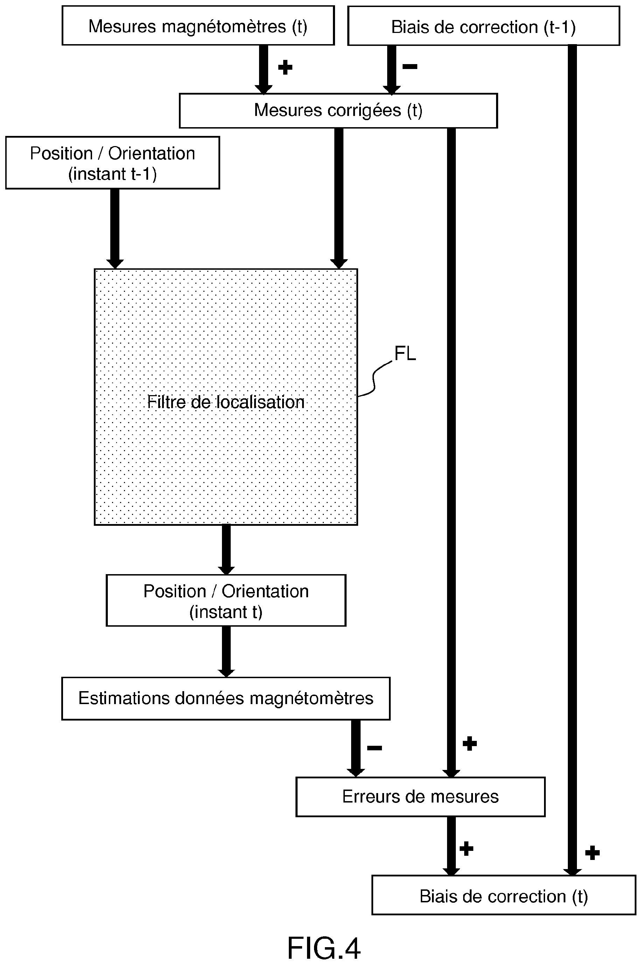

La figure 4 représente schématiquement un procédé de localisation d'au moins un objet magnétique mobile OMMₖ par rapport à un réseau d'au moins N magnétomètres triaxiaux M_{i,j} reliés entre-eux mécaniquement sans aucun degré de liberté pour conserver une position relative connue de ces magnétomètres M_{i,j} selon un aspect de l'invention.

Les mesures fournies par les magnétomètres M_{i,j} à l'instant courant t sont corrigées d'un offset de correction respectif, ou biais de correction respectif BC_{i,j}^{mes}, calculé à l'instant précédent t-1, puis fournies en entrée du filtrage de localisation FL ainsi qu'une localisation (par exemple position et orientation) du ou des objets magnétiques mobiles OMMₖ à l'instant précédent t-1.

Le filtrage de localisation FL délivre en sortie une localisation (par exemple position et orientation) du ou des objets magnétiques mobiles OMMₖ à l'instant courant t, permettant de calculer des estimations des données fournies par les magnétomètres M_{i,j}, permettant à leur tour de calculer, par soustraction aux mesures corrigées de l'instant courant t, une erreur de mesure respective de chaque magnétomètre M_{i,j}. Ces erreurs de mesures respectives, additionnées aux mesures corrigées de l'instant courant t permet de déterminer les biais de correction respectif BC_{i,j}^{mes} de l'instant courant t.

Ces étapes sont répétées de manière continue ou itérative, permettant ainsi, à chaque itération, de déterminer les biais de correction BC_{i.j}^{mes} des magnétomètres M_{i,j}. Ainsi, le procédé de l'invention de corriger, en continu, d'éventuelle magnétisation des magnétomètres M_{i,j}.

Les étapes du procédé sont mises en œuvre par des moyens de l'unité électronique de traitement 11.

Ainsi, le procédé comprend :
- une étape de détection E1 d'un magnétomètre M_{i,j} susceptible d'être magnétisé, i.e. susceptible de délivrer en sortie des mesures B_{i,j}^{mes} comprenant un biais de mesure BM_{i.j}^{mes} suite à une magnétisation;
- une étape de correction E2, au moyen d'un biais de correction BC_{i,j}^{mes}, des mesures B_{i,j}^{mes} délivrées par ledit magnétomètre M_{i,j} susceptible d'être magnétisé, ledit biais de correction BC_{i,j}^{mes} correspondant à un écart entre les mesures B_{i,j}^{mes} fournies par ledit magnétomètre M_{i,j} en entrée d'un filtrage de localisation FL et les estimations B_{i,j}^{est}, lors dudit filtrage de localisation FL, des données délivrées par ledit magnétomètre M_{i,j}; et
- une étape considération E3 dudit magnétomètre M_{i,j} comme non susceptible d'être magnétisé, par prise en compte de ladite étape de correction dudit magnétomètre M_{i,j} susceptible d'être magnétisé.

Le procédé peut également comprendre une étape de limitation d'influence E4 consistant à limiter, dans ledit filtrage de localisation FL, l'influence des mesures B_{i,j}^{mes} fournies par ledit magnétomètre M_{i,j} susceptible d'être magnétisé.

Cette étape de limitation d'influence E4 peut comprendre une augmentation d'une variance associée aux mesures B_{i,j}^{mes} dudit magnétomètre M_{i,j} susceptible d'être magnétisé dans ledit filtrage de localisation FL utilisant un filtrage de Kalman, ou une non prise en compte des mesures B_{i,j}^{mes} dudit magnétomètre M_{i,j} susceptible d'être magnétisé dans ledit filtrage de localisation FL.

L'étape de détection E1 peut utiliser une information de saturation d'un registre de statuts directement fournie par ledit magnétomètre M_{i,j} susceptible d'être magnétisé; et/ou détecter un magnétomètre M_{i,j} susceptible d'être magnétisé lorsqu'une norme des valeurs des mesures B_{i,j}^{mes} fournies par ledit magnétomètre M_{i,j} susceptible d'être magnétisé sont supérieures à un premier seuil S1; et/ou détecter un magnétomètre M_{i,j} susceptible d'être magnétisé lorsqu'une norme des estimations B_{i,j}^{est}, lors dudit filtrage de localisation FL, des données délivrées par ledit magnétomètre M_{i,j} susceptible d'être magnétisé, sont supérieures d'un deuxième seuil S2, à la norme des estimations B_{i,j}^{est} desdites données délivrées calculées à partir des estimations B_{i,j}^{est}, lors dudit filtrage de localisation FL, des données délivrées par les autres magnétomètre M_{i,j} non détectés comme susceptibles d'être magnétisés; et/ou détecter un magnétomètre M_{i,j} susceptible d'être magnétisé lorsqu'une erreur sur les mesures B_{i,j}^{mes} d'un magnétomètre M_{i,j} est supérieure, d'un troisième seuil S3, à chacune des erreurs sur les mesures B_{i,j}^{mes} des autres magnétomètres M_{i,j}, une erreur sur les mesures B_{i,j}^{mes} d'un magnétomètre M_{i,j} correspondant à un écart entre les mesures B_{i,j}^{mes} fournies par ledit magnétomètre M_{i,j} en entrée d'un filtrage de localisation FL et les estimations B_{i,j}^{est}, lors dudit filtrage de localisation FL, des données délivrées par ledit magnétomètre M_{i,j}.

En variante de cette dernière condition, l'étape de détection E1 peut détecter un magnétomètre M_{i,j} susceptible d'être magnétisé lorsqu'une norme d'une erreur sur les mesures B_{i,j}^{mes} d'un magnétomètre M_{i,j} est supérieure à un troisième seuil S3bis.

L'étape de correction E2 peut être réalisée lorsque ledit magnétomètre M_{i,j} susceptible d'être magnétisé n'est pas saturé; et/ou lorsque les mesures B_{i,j}^{mes} délivrées par ledit magnétomètre M_{i,j} susceptible d'être magnétisé sont inférieures à un quatrième seuil S4; et/ou lorsque les estimations des données B_{i,j}^{mes} délivrées par ledit magnétomètre M_{i,j} susceptible d'être magnétisé sont inférieures au quatrième seuil S4; et/ou lorsque la distance séparant ledit magnétomètre M_{i,j} susceptible d'être magnétisé et le ou les objets magnétiques mobiles OMMₖ est supérieure à un cinquième seuil S5; et/ou lorsque le ou les objets magnétiques mobiles OMMₖ sont dans une position stable; et/ou lorsqu'une variance d'une position estimée du ou des objets magnétiques mobiles OMMₖ, sur une pluralité d'estimations successives, est inférieure à un sixième seuil S6; et/ou lorsqu'une variance d'une erreur sur les mesures B_{i,j}^{mes} des magnétomètres M_{i,j} non détectés comme susceptibles d'être magnétisés, sur une pluralité d'estimations successives, est inférieure à un septième seuil S7.

Les étapes du procédé décrit ci-dessus peuvent être effectuées par un ou plusieurs processeurs programmables exécutant un programme informatique pour exécuter les fonctions de l'invention en opérant sur des données d'entrée et générant des données de sortie.

Un programme d'ordinateur peut être écrit dans n'importe quelle forme de langage de programmation, y compris les langages compilés ou interprétés, et le programme d'ordinateur peut être déployé dans n'importe quelle forme, y compris en tant que programme autonome ou comme un sous-programme, élément ou autre unité appropriée pour une utilisation dans un environnement informatique. Un programme d'ordinateur peut être déployée pour être exécuté sur un ordinateur ou sur plusieurs ordinateurs à un seul site ou répartis sur plusieurs sites et reliées entre elles par un réseau de communication.

## Revendications

1. Procédé de localisation d'au moins un objet magnétique mobile (OMMₖ) par rapport à un réseau d'au moins N magnétomètres triaxiaux (M_{i,j}) reliés entre-eux mécaniquement sans aucun degré de liberté pour conserver une position relative connue de ces magnétomètres (M_{i,j}), N étant un nombre entier au moins égal à 2, comprend, en continu:
- une étape de détection (E1) d'un magnétomètre (M_{i,j}) susceptible d'être magnétisé, i.e. susceptible de délivrer en sortie des mesures (B_{i,j}^{mes}) comprenant un biais de mesure (BM_{i,j}^{mes}) suite à une magnétisation;
- une étape de correction (E2), au moyen d'un biais de correction (BC_{i,j}^{mes}), des mesures (B_{i,j}^{mes}) délivrées par ledit magnétomètre (M_{i,j}) susceptible d'être magnétisé, ledit biais de correction (BC_{i,j}^{mes}) correspondant à un écart entre les mesures (B_{i,j}^{mes}) fournies par ledit magnétomètre (M_{i,j}) en entrée d'un filtrage de localisation (FL) et les estimations (B_{i,j}^{est}), lors dudit filtrage de localisation (FL), des données délivrées par ledit magnétomètre (M_{i,j}); et
- une étape de prise en considération (E3) dudit magnétomètre (M_{i,j}) comme non susceptible d'être magnétisé, par prise en compte de ladite étape de correction dudit magnétomètre (M_{i,j}) susceptible d'être magnétisé.

2. Procédé selon la revendication 1, comprenant une étape de limitation d'influence (E4) consistant à limiter, dans ledit filtrage de localisation (FL), l'influence des mesures (B_{i,j}^{mes}) fournies par ledit magnétomètre (M_{i,j}) susceptible d'être magnétisé.

3. Procédé selon la revendication 2, dans lequel l'étape de limitation d'influence (E4) comprend une augmentation d'une variance associée aux mesures (B_{i,j}^{mes}) dudit magnétomètre (M_{i,j}) susceptible d'être magnétisé dans ledit filtrage de localisation (FL) utilisant un filtrage de Kalman.

4. Procédé selon la revendication 2, dans lequel l'étape de limitation d'influence (E4) comprend une non prise en compte des mesures (B_{i,j}^{mes}) dudit magnétomètre (M_{i,j}) susceptible d'être magnétisé dans ledit filtrage de localisation (FL).

5. Procédé selon l'une des revendications précédentes, dans lequel l'étape de détection (E1) utilise une information de saturation d'un registre de statuts directement fournie par ledit magnétomètre (M_{i,j}) susceptible d'être magnétisé.

6. Procédé selon l'une des revendications précédentes, dans lequel l'étape de détection (E1) détecte un magnétomètre (M_{i,j}) susceptible d'être magnétisé lorsqu'une norme des valeurs des mesures (B_{i,j}^{mes}) fournies par ledit magnétomètre (M_{i,j}) susceptible d'être magnétisé sont supérieures à un premier seuil (S1).

7. Procédé selon l'une des revendications précédentes, dans lequel l'étape de détection (E1) détecte un magnétomètre (M_{i,j}) susceptible d'être magnétisé lorsqu'une norme des estimations (B_{i,j}^{est}), lors dudit filtrage de localisation (FL), des données délivrées par ledit magnétomètre (M_{i,j}) susceptible d'être magnétisé, sont supérieures d'un deuxième seuil (S2), à la norme des estimations (B_{i,j}^{est}) desdites données délivrées calculées à partir des estimations (B_{i,j}^{est}), lors dudit filtrage de localisation (FL), des données délivrées par les autres magnétomètre (M_{i,j}) non détectés comme susceptibles d'être magnétisés.

8. Procédé selon l'une des revendications précédentes, dans lequel l'étape de détection (E1) détecte un magnétomètre (M_{i,j}) susceptible d'être magnétisé lorsqu'une norme d'une erreur sur les mesures (B_{i,j}^{mes}) d'un magnétomètre (M_{i,j}) est supérieure, d'un troisième seuil (S3), à chacune des erreurs sur les mesures (B_{i,j}^{mes}) des autres magnétomètres (M_{i,j}), une erreur sur les mesures (B_{i,j}^{mes}) d'un magnétomètre (M_{i,j}) correspondant à un écart entre les mesures (B_{i,j}^{mes}) fournies par ledit magnétomètre (M_{i,j}) en entrée d'un filtrage de localisation (FL) et les estimations (B_{i,j}^{est}), lors dudit filtrage de localisation (FL), des données délivrées par ledit magnétomètre (M_{i,j}).

9. Procédé selon l'une des revendications 1 à 7, dans lequel l'étape de détection (E1) détecte un magnétomètre (M_{i,j}) susceptible d'être magnétisé lorsqu'une norme d'une erreur sur les mesures (B_{i,j}^{mes}) d'un magnétomètre (M_{i,j}) est supérieure à un troisième seuil (S3bis)

10. Procédé selon l'une des revendications précédentes, dans lequel l'étape de correction (E2) est réalisée lorsque ledit magnétomètre (M_{i,j}) susceptible d'être magnétisé n'est pas saturé.

11. Procédé selon la revendication 10, dans lequel l'étape de correction (E2) est réalisée lorsque les mesures (B_{i,j}^{mes}) délivrées par ledit magnétomètre (M_{i,j}) susceptible d'être magnétisé sont inférieures à un quatrième seuil (S4).

12. Procédé selon la revendication 10 ou 11, dans lequel l'étape de correction (E2) est réalisée lorsque les estimations des données (B_{i,j}^{mes}) délivrées par ledit magnétomètre (M_{i,j}) susceptible d'être magnétisé sont inférieures à un quatrième seuil (S4).

13. Procédé selon l'une des revendications 10 à 12, dans lequel l'étape de correction (E2) est réalisée lorsque la distance séparant ledit magnétomètre (M_{i,j}) susceptible d'être magnétisé et le ou les objets magnétiques mobiles (OMMₖ) est supérieure à un cinquième seuil (S5).

14. Procédé selon l'une des revendications 10 à 13, dans lequel l'étape de correction (E2) est réalisée lorsque le ou les objets magnétiques mobiles (OMMₖ) sont dans une position stable.

15. Procédé selon la revendication 14, dans lequel l'étape de correction (E2) est réalisée lorsqu'une variance d'une position estimée du ou des objets magnétiques mobiles (OMMₖ), sur une pluralité d'estimations successives, est inférieure à un sixième seuil (S6).

16. Procédé selon la revendication 14 ou 15, dans lequel l'étape de correction (E2) est réalisée lorsqu'une variance d'une erreur sur les mesures (B_{i,j}^{mes}) des magnétomètres (M_{i,j}) non détectés comme susceptibles d'être magnétisés, sur une pluralité d'estimations successives, est inférieure à un septième seuil (S7).

17. Système de localisation d'au moins un objet magnétique mobile (OMMₖ) comprenant:
- un réseau d'au moins N magnétomètres triaxiaux (Mi,j) reliés entre-eux mécaniquement sans aucun degré de liberté pour conserver une position relative connue de ces magnétomètres (M_{i,j}), N étant un nombre entier au moins égal à 2;
- une unité électronique de traitement (11) adapté pour déterminer la localisation (Post, Mₜ) du ou des objets magnétiques mobiles (OMMₖ) à partir de mesures (Bᵢ^{mes}) fournies par les magnétomètres (M_{i,j}) du réseau et d'un filtre de localisation (FL); ladite unité électronique de traitement (11) comprenant:
- des moyens de détection d'un magnétomètre (Mi,j) susceptible d'être magnétisé, i.e. susceptible de délivrer en sortie des mesures (B_{i,j}^{mes}) comprenant un biais de mesure (BM_{i,j}^{mes}) suite à une magnétisation;
- des moyens de correction, au moyen d'un biais de correction (BC_{i,j}^{mes}), des mesures (B_{i,j}^{mes}) délivrées par ledit magnétomètre (Mi,j) susceptible d'être magnétisé, ledit biais de correction (BC_{i,j}^{mes}) correspondant à un écart entre les mesures (B_{i,j}^{mes}) fournies par ledit magnétomètre (M_{i,j}) en entrée d'un filtrage de localisation (FL) et les estimations (B_{i,j}^{est}), lors dudit filtrage de localisation (FL), des données délivrées par ledit magnétomètre (M_{i,j}); et **caractérisé en ce que** le système comprend
- des moyens de considération dudit magnétomètre (Mi,j) comme non susceptible d'être magnétisé, par prise en compte de ladite étape de correction (E2) dudit magnétomètre (Mi,j) susceptible d'être magnétisé.

## Patentansprüche

1. Verfahren zur Ortung von mindestens einem beweglichen magnetischen Objekt (OMMₖ) in Bezug auf ein Netzwerk aus mindestens N Dreiachsen-Magnetometern (M_{i,j}), die mechanisch ohne irgendeinen Freiheitsgrad untereinander verbunden sind, um eine bekannte relative Position dieser Magnetometer (M_{i,j}) zu bewahren, wobei N eine ganze Zahl von mindestens gleich 2 ist, umfasst, kontinuierlich:
- einen Detektionsschritt (E1) zum Detektieren eines Magnetometers (M_{i,j}), das magnetisierbar ist, d. h. geeignet ist, nach einer Magnetisierung im Ausgang Messungen (B_{i,j}^{mes}) auszugeben, die einen Mess-Bias (BM_{i,j}^{mes}) umfassen;
- einen Korrekturschritt (E2) zum Korrigieren, mittels eines Korrektur-Bias (BC_{i,j}^{mes}), der Messungen (B_{i,j}^{mes}), die von dem magnetisierbaren Magnetometer (M_{i,j}) ausgegeben werden, wobei der Korrektur-Bias (BC_{i,j}^{mes}) einer Abweichung zwischen den Messungen (B_{i,j}^{mes}), die von dem Magnetometer (M_{i,j}) im Eingang einer Ortungsfilterung (FL) bereitgestellt werden, und den Schätzungen (B_{i,j}^{est}), bei der Ortungsfilterung (FL), der Daten, die von dem Magnetometer (M_{i,j}) ausgegeben werden, entspricht; und
- einen Schritt des Berücksichtigens (E3) des Magnetometers (M_{i,j}) als nicht magnetisierbar, durch Berücksichtigen des Korrekturschritts des magnetisierbaren Magnetometers (M_{i,j}).

2. Verfahren nach Anspruch 1, umfassend einen Schritt des Einflussbeschränkens (E4), der darin besteht, bei der Ortungsfilterung (FL), den Einfluss der Messungen (B_{i,j}^{mes}) zu beschränken, die von dem magnetisierbaren Magnetometer (M_{i,j}) bereitgestellt werden.

3. Verfahren nach Anspruch 2, bei dem der Schritt des Einflussbeschränkens (E4) eine Erhöhung einer Varianz, die den Messungen (B_{i,j}^{mes}) des magnetisierbaren Magnetometers (M_{i,j}) zugewiesen ist, bei der Ortungsfilterung (FL) unter Verwendung einer Kalman-Filterung umfasst.

4. Verfahren nach Anspruch 2, bei dem der Schritt des Einflussbeschränkens (E4) eine Nichtberücksichtigung der Messungen (B_{i,j}^{mes}) des magnetisierbaren Magnetometers (M_{i,j}) bei der Ortungsfilterung (FL) umfasst.

5. Verfahren nach einem der vorhergehenden Ansprüche, bei dem der Detektionsschritt (E1) eine Sättigungsinformation eines Statusregisters verwendet, die direkt von dem magnetisierbaren Magnetometer (M_{i,j}) bereitgestellt wird.

6. Verfahren nach einem der vorhergehenden Ansprüche, bei dem der Detektionsschritt (E1) ein magnetisierbares Magnetometer (M_{i,j}) detektiert, wenn eine Norm der Werte der Messungen (B_{i,j}^{mes}), die von dem magnetisierbaren Magnetometer (M_{i,j}) bereitgestellt werden, größer als ein erster Schwellenwert (S1) ist.

7. Verfahren nach einem der vorhergehenden Ansprüche, bei dem der Detektionsschritt (E1) ein magnetisierbares Magnetometer (M_{i,j}) detektiert, wenn eine Norm der Schätzungen (B_{i,j}^{est}), bei der Ortungsfilterung (FL), der Daten, die von dem magnetisierbaren Magnetometer (M_{i,j}) ausgegeben werden, um einen zweiten Schwellenwert (S2) größer ist als die Norm der Schätzungen (B_{i,j}^{est}) der ausgegebenen Daten, die anhand der Schätzungen (B_{i,j}^{est}), bei der Ortungsfilterung (FL), der Daten berechnet werden, die von den anderen nicht als magnetisierbar detektierten Magnetometern (M_{i,j}) ausgegeben werden.

8. Verfahren nach einem der vorhergehenden Ansprüche, bei dem der Detektionsschritt (E1) ein magnetisierbares Magnetometer (M_{i,j}) detektiert, wenn eine Norm eines Fehlers über die Messungen (B_{i,j}^{mes}) eines Magnetometers (M_{i,j}) um einen dritten Schwellenwert (S3) größer ist als jeder der Fehler über die Messungen (B_{i,j}^{mes}) der anderen Magnetometer (M_{i,j}), wobei ein Fehler über die Messungen (B_{i,j}^{mes}) eines Magnetometers (M_{i,j}) einer Abweichung zwischen den Messungen (B_{i,j}^{mes}), die von dem Magnetometer (M_{i,j}) im Eingang eines Ortungsfilters (FL) bereitgestellt werden, und den Schätzungen (B_{i,j}^{est}), bei der Ortungsfilterung (FL), der Daten, die von dem Magnetometer (M_{i,j}) ausgegeben werden, entspricht.

9. Verfahren nach einem der Ansprüche 1 bis 7, bei dem der Detektionsschritt (E1) ein magnetisierbares Magnetometer (M_{i,j}) detektiert, wenn eine Norm eines Fehlers über die Messungen (B_{i,j}^{mes}) eines Magnetometers (M_{i,j}) größer als ein dritter Schwellenwert (S3bis) ist.

10. Verfahren nach einem der vorhergehenden Ansprüche, bei dem der Korrekturschritt (E2) ausgeführt wird, wenn das magnetisierbare Magnetometer (M_{i,j}) nicht gesättigt ist.

11. Verfahren nach Anspruch 10, bei dem der Korrekturschritt (E2) ausgeführt wird, wenn die Messungen (B_{i,j}^{mes}), die von dem magnetisierbaren Magnetometer (M_{i,j}) ausgegeben werden, kleiner als ein vierter Schwellenwert (S4) sind.

12. Verfahren nach Anspruch 10 oder 11, bei dem der Korrekturschritt (E2) ausgeführt wird, wenn die Schätzungen der Daten (B_{i,j}^{mes}), die von dem magnetisierbaren Magnetometer (M_{i,j}) ausgegeben werden, kleiner als ein vierter Schwellenwert (S4) sind.

13. Verfahren nach einem der Ansprüche 10 bis 12, bei dem der Korrekturschritt (E2) ausgeführt wird, wenn der Abstand, der das magnetisierbare Magnetometer (M_{i,j}) und das oder die beweglichen magnetischen Objekte (OMMₖ) trennt, größer als ein fünfter Schwellenwert (S5) ist.

14. Verfahren nach einem der Ansprüche 10 bis 13, bei dem der Korrekturschritt (E2) ausgeführt wird, wenn das oder die beweglichen magnetischen Objekte (OMMₖ) in einer stabilen Position sind.

15. Verfahren nach Anspruch 14, bei dem der Korrekturschritt (E2) ausgeführt wird, wenn eine Varianz einer geschätzten Position des oder der beweglichen magnetischen Objekte (OMMₖ), über eine Mehrzahl von aufeinanderfolgenden Schätzungen, kleiner als ein sechster Schwellenwert (S6) ist.

16. Verfahren nach Anspruch 14 oder 15, bei dem der Korrekturschritt (E2) ausgeführt wird, wenn eine Varianz eines Fehlers über die Messungen (B_{i,j}^{mes}) der nicht als magnetisierbar detektierten Magnetometer (M_{i,j}), über eine Mehrzahl von aufeinanderfolgenden Schätzungen, kleiner als ein siebter Schwellenwert (S7) ist.

17. System zur Ortung von mindestens einem beweglichen magnetischen Objekt (OMMₖ), umfassend:
- ein Netzwerk aus mindestens N Dreiachsen-Magnetometern (M_{i,j}), die mechanisch ohne irgendeinen Freiheitsgrad untereinander verbunden sind, um eine bekannte relative Position dieser Magnetometer (M_{i,j}) zu bewahren, wobei N eine ganze Zahl von mindestens gleich 2 ist;
- eine elektronische Verarbeitungseinheit (11), die dazu eingerichtet ist, die Position (Post, Mₜ) des oder der beweglichen magnetischen Objekte (OMMₖ) anhand von Messungen (Bᵢ^{mes}), die von den Magnetometern (M_{i,j}) des Netzwerks bereitgestellt werden, und eines Ortungsfilters (FL) zu bestimmen;
wobei die elektronische Verarbeitungseinheit (11) umfasst:
- Einrichtungen zum Detektieren eines Magnetometers (M_{i,j}), das magnetisierbar ist, d. h. geeignet ist, nach einer Magnetisierung im Ausgang Messungen (B_{i,j}^{mes}) auszugeben, die einen Mess-Bias (BM_{i,j}^{mes}) umfassen;
- Einrichtungen zum Korrigieren, mittels eines Korrektur-Bias (BC_{i,j}^{mes}), der Messungen (B_{i,j}^{mes}), die von dem magnetisierbaren Magnetometer (M_{i,j}) ausgegeben werden, wobei der Korrektur-Bias (BC_{i,j}^{mes}) einer Abweichung zwischen den Messungen (B_{i,j}^{mes}), die von dem Magnetometer (M_{i,j}) im Eingang einer Ortungsfilterung (FL) bereitgestellt werden, und den Schätzungen (B_{i,j}^{est}), bei der Ortungsfilterung (FL), der Daten, die von dem Magnetometer (M_{i,j}) ausgegeben werden, entspricht;
und **dadurch gekennzeichnet, dass** das System umfasst
- Einrichtungen zum Betrachten des Magnetometers (M_{i,j}) als nicht magnetisierbar durch Berücksichtigen des Korrekturschritts (E2) des magnetisierbaren Magnetometers (M_{i,j}).

## Claims

1. Method for locating at least one movable magnetic object (OMMₖ) in relation to a network of at least N tri-axial magnetometers (M_{i,j}) linked together mechanically with no degree of freedom to retain a known relative position of these magnetometers (M_{i,j}), N being an integer number at least equal to 2, comprises, continuously:
- a step of detection (E1) of a magnetometer (M_{i,j}) capable of being magnetized, i.e. capable of delivering as output measurements (B_{i,j}^{mes}) comprising a measurement bias (BM_{i,j}^{mes}) following a magnetization;
- a step of correction (E2), by means of a correction bias (BC_{i,j}^{mes}), of the measurements (B_{i,j}^{mes}) delivered by said magnetometer (Mij) capable of being magnetized, said correction bias (BC_{i,j}^{mes}) corresponding to a deviation between the measurements (B_{i,j}^{mes}) supplied by said magnetometer (Mij) as input for a location filtering (FL) and the estimations (B_{i,j}^{est}), upon said location filtering (FL), of the data delivered by said magnetometer (M_{i,j}); and
- a step of consideration (E3) of said magnetometer (M_{i,j}) as not capable of being magnetized, by taking into account said step of correction of said magnetometer (M_{i,j}) capable of being magnetized.

2. Method according to Claim 1, comprising an influence limiting step (E4) consisting in limiting, in said location filtering (FL), the influence of the measurements (B_{i,j}^{mes}) supplied by said magnetometer (M_{i,j}) capable of being magnetized.

3. Method according to Claim 2, in which the influence limiting step (E4) comprises an increasing of a variance associated with the measurements (B_{i,j}^{mes}) of said magnetometer (M_{i,j}) capable of being magnetized in said location filtering (FL) using a Kalman filtering.

4. Method according to Claim 2, in which the influence limiting step (E4) comprises not taking into account the measurements (B_{i,j}^{mes}) of said magnetometer (M_{i,j}) capable of being magnetized in said location filtering (FL).

5. Method according to one of the preceding claims, in which the detection step (E1) uses information on saturation of a register of status information directly supplied by said magnetometer (M_{i,j}) capable of being magnetized.

6. Method according to one of the preceding claims, in which the detection step (E1) detects a magnetometer (M_{i,j}) capable of being magnetized when a norm of the values of the measurements (B_{i,j}^{mes}) supplied by said magnetometer (M_{i,j}) capable of being magnetized is greater than a first threshold (S1).

7. Method according to one of the preceding claims, in which the detection step (E1) detects a magnetometer (M_{i,j}) capable of being magnetized when a norm of the estimations (B_{i,j}^{est}), upon said location filtering (FL), of the data delivered by said magnetometer (M_{i,j}) capable of being magnetized, is greater by a second threshold (S2) than the norm of the estimations (B_{i,j}^{est}) of said delivered data computed from the estimations (B_{i,j}^{est}), upon said location filtering (FL), of the data delivered by the other magnetometers (M_{i,j}) not detected as capable of being magnetized.

8. Method according to one of the preceding claims, in which the detection step (E1) detects a magnetometer (M_{i,j}) capable of being magnetized when a norm of an error on the measurements (B_{i,j}^{mes}) of a magnetometer (Mij) is greater by a third threshold (S3) than each of the errors on the measurements (B_{i,j}^{mes}) of the other magnetometers (M_{i,j}), an error on the measurements (B_{i,j}^{mes}) of a magnetometer (M_{i,j}) corresponding to a deviation between the measurements (B_{i,j}^{mes}) supplied by said magnetometer (M_{i,j}) as input for a location filtering (FL) and the estimations (B_{i,j}^{est}), upon said location filtering (FL), of the data delivered by said magnetometer (M_{i,j}).

9. Method according to one of Claims 1 to 7, in which the detection step (E1) detects a magnetometer (M_{i,j}) capable of being magnetized when a norm of an error on the measurements (B_{i,j}^{mes}) of a magnetometer (M_{i,j}) is greater than a third threshold (S3bis).

10. Method according to one of the preceding claims, in which the correction step (E2) is performed when said magnetometer (M_{i,j}) capable of being magnetized is not saturated.

11. Method according to Claim 10, in which the correction step (E2) is performed when the measurements (B_{i,j}^{mes}) delivered by said magnetometer (M_{i,j}) capable of being magnetized are below a fourth threshold (S4).

12. Method according to Claim 10 or 11, in which the correction step (E2) is performed when the estimations of the data (B_{i,j}^{mes}) delivered by said magnetometer (M_{i,j}) capable of being magnetized are below a fourth threshold (S4).

13. Method according to one of Claims 10 to 12, in which the correction step (E2) is performed when the distance separating said magnetometer (M_{i,j}) capable of being magnetized and the movable magnetic object or objects (OMMₖ) is greater than a fifth threshold (S5).

14. Method according to one of Claims 10 to 13, in which the correction step (E2) is performed when the movable magnetic object or objects (OMMₖ) are in a stable position.

15. Method according to Claim 14, in which the correction step (E2) is performed when a variance of an estimated position of the movable magnetic object or objects (OMMₖ), over a plurality of successive estimations, is below a sixth threshold (S6).

16. Method according to Claim 14 or 15, in which the correction step (E2) is performed when a variance of an error on the measurements (B_{i,j}^{mes}) of the magnetometers (M_{i,j}) not detected as capable of being magnetized, over a plurality of successive estimations, is below a seventh threshold (S7).

17. System for locating at least one movable magnetic object (OMMₖ) comprising:
- a network of at least N tri-axial magnetometers (Mi,j) linked together mechanically with no degree of freedom to retain a known relative position of these magnetometers (M_{i,j}), N being an integer number at least equal to 2;
- an electronic processing unit (11) suitable for determining the location (Post, Mₜ) of the movable magnetic object or objects (OMMₖ) on the basis of measurements (Bᵢ^{mes}) supplied by the magnetometers (M_{i,j}) of the network and of a location filter (FL);
said electronic processing unit (11) comprising:
- means for detecting a magnetometer (Mi,j) capable of being magnetized, i.e. capable of delivering as output measurements (B_{i,j}^{mes}) comprising a measurement bias (BM_{i,j}^{mes}) following a magnetization;
- means for correcting, by means of a correction bias (BC_{i,j}^{mes}), the measurements (B_{i,j}^{mes}) delivered by said magnetometer (Mi,j) capable of being magnetized, said correction bias (BC_{i,j}^{mes}) corresponding to a deviation between the measurements (B_{i,j}^{mes}) supplied by said magnetometer (M_{i,j}) as input for location filtering (FL) and the estimations (B_{i,j}^{est}), upon said location filtering (FL), of the data delivered by said magnetometer (Mi,j);
and **characterized in that** the system comprises
- means for considering said magnetometer (Mi,j) as not capable of being magnetized, by taking into account said step of correction (E2) of said magnetometer (Mi,j) capable of being magnetized.
